# EUROPÄISCHE PATENTSCHRIFT

(11) **EP 1 455 155 B1**
(45) Veröffentlichungstag und Bekanntmachung des Hinweises auf die Patenterteilung: **02.01.2008**
(21) Anmeldenummer: 04004624.5
(22) Anmeldetag: 01.03.2004
(51) Int. Cl.: F28D 20/02

(54) **PCM-Element**
PCM-Element
Element-PCM

(30) Priorität: 04.03.2003 DE 20303514 U; 09.07.2003 DE 20310593 U
(43) Veröffentlichungstag der Anmeldung: 08.09.2004
(60) Teilanmeldung: 06021371.7
(73) Patentinhaber: Imtech Deutschland GmbH & Co. KG, 22047 Hamburg (DE)
(72) Erfinder: Detzer, Rüdiger, Prof. Dr.-Ing., 35418 Buseck (DE); Boiting, Bernd, Dr.-Ing., 48565 Steinfurt (DE)
(74) Vertreter: Richter, Werdermann, Gerbaulet & Hofmann

(56) Entgegenhaltungen:
- WO-A-98/42929
- FR-A- 2 831 950
- GB-A- 2 327 751
- US-A- 3 744 272
- US-A- 4 250 958
- US-A- 4 327 560
- US-A- 4 471 834
- US-A- 5 220 954
- US-A- 6 101 830
- US-A- 6 158 236
- US-A1- 2003 121 637
- US-B1- 6 343 485

## Beschreibung

Die vorliegende Erfindung betrifft ein PCM (Phase Change Material)-Element zur latenten Wärmespeicherung, bei dem Phasenwechselmaterial (Phase Change Material) innerhalb einer Umhüllung angeordnet ist so ein PCM-Element ist aus US-Patent 4 250 958 bekannt.

Als Speichermedien bekannt sind zum Beispiel Wasser oder Steine/Beton, um fühlbare ("sensible") Wärme zu speichern, oder Phasenwechselmaterialien (Phase Change Materials, PCM) wie Salze, Salzhydrate oder deren Gemische oder organische Verbindungen (zum Beispiel Paraffin), um Wärme in Form von Schmelzwärme ("latenter" Wärme) zu speichern. Es ist bekannt, dass beim Schmelzen einer Substanz, das heißt beim Übergang von der festen in die flüssige Phase, Wärme verbraucht, das heißt aufgenommen wird, die, solange der flüssige Zustand bestehen bleibt, latent gespeichert wird und dass diese latente Wärme beim Erstarren, das heißt beim Übergang von der flüssigen in die feste Phase, wieder frei wird. Grundsätzlich ist für das Laden eines Wärmespeichers eine höhere Temperatur erforderlich als beim Entladen erhalten werden kann, da für den Transport/Fluss von Wärme eine Temperaturdifferenz erforderlich ist. Die Qualität der Wärme ist dabei von der Temperatur, bei der sie wieder zur Verfügung steht, abhängig: Je höher die Temperatur ist, desto besser kann die Wärme abgeführt werden. Aus diesem Grund ist es erstrebenswert, dass das Temperaturniveau bei der Speicherung so wenig wie möglich absinkt. Bei sensibler Wärmespeicherung (zum Beispiel durch Erhitzen von Wasser) ist mit dem Eintrag von Wärme eine stetige Erhitzung des Speichermaterials verbunden (und umgekehrt beim Entladen), während latente Wärme bei der Schmelztemperatur des PCM gespeichert und entladen wird. Latente Wärmespeicherung hat daher gegenüber sensibler Wärmespeicherung den Vorteil, dass sich der Temperaturverlust auf den Verlust beim Wärmetransport von und zum Speicher beschränkt.

Wärmespeicher finden vor allem in Kühlvorrichtungen Anwendung, da sie Wärme aus ihrer Umgebung aufnehmen und abführen können. Um auf Phasenwechselmaterialien (PCM) basierende Wärmespeicher für eine Kühlung von geschlossenen Räumen zu verwenden, ist es bekannt, innerhalb des geschlossenen Raumes oder innerhalb der den Raum umgebenden Wand Kühlflächen anzubringen, die aus einem geeigneten PCM bestehen. Um eine Nachrüstbarkeit der auf PCM basierenden Kühltechnik zu realisieren, ist es vorteilhaft, die Kühlflächen innerhalb von Zwischenwänden oder abgehangenen Decken anzuordnen. Dabei werden entsprechend den kapazitiven Anforderungen und den räumlichen Gegebenheiten unterschiedlichste geometrische Ausführungen der Kühlflächen notwendig.

Das US-Patent 4,250,958 offenbart ein PCM-Element, welches Phasenwechselmaterial innerhalb einer Umhüllung enthält. Die Umhüllung setzt sich dabei aus einem inneren Teil und einem äußeren Teil zusammen. Die Umhüllung besteht aus wärmeleitendem Material, welches vorzugsweise Polyolefin, d. h. ein Kunststoff, ist. Die Umhüllung in dem US-Patent ist dabei durch Extrusion und nicht durch Strangpressen hergestellt.

Ein Nachteil des in dem US-Patent 4,250,958 offenbarten PCM-Elements ist jedoch darin zu sehen, dass das PCM-Element keine weiteren konstruktiven Anregungen enthält, um den Wärmeaustausch zwischen Phasenwechselmaterial innerhalb der Umhüllung und der Umgebung weiter zu erhöhen, wobei gleichzeitig wichtige andere Funktionalitäten der Umhüllung erhalten bleiben.

Es liegt somit der vorliegenden Erfindung die Aufgabe zugrunde, ein PCM-Element zur Verfügung zu stellen, bei dem der Wärmeaustausch zwischen Wechselmaterial und Umgebung, d. h. die Wärmeleitung durch die Umhüllung weiter erhöht wird, wobei gleichzeitig wichtige Funktionalitäten der Umhüllung wie Schutz vor äußeren Beschädigungen, Auslaufschutz etc. erhalten bleiben.

Gelöst wird diese Aufgabe durch ein PCM-Element mit den in Anspruch 1 angegebenen Merkmalen.

Gemäß der Erfindung wird also unterschieden zwischen der eigentlichen Umhüllung und einem innerhalb der Umhüllung angeordneten Geflecht und/oder Profil aus wärmeleitendem Material. Die Umhüllung besteht dabei aus mindestens einem zweischichtigen, mehrschichtigen Material, wobei gemäß der Erfindung vorgesehen ist, eine mehrschichtige Folie zu verwenden. Diese kann erfindungsgemäß eine hochelastische Zwischenschicht aufweisen, die ein Auslaufen oder Austreten des PCM bei Verformung oder Beschädigung sicher verhindert, während zudem die ein- oder beidseitige Deckschicht aus einem flammfesten oder nicht brennbaren Material besteht, um die Brandsicherheit zu erhöhen. Mit Aluminium liegt gemäß der Erfindung ein Leichtmetall vor, welches sich wie die Folie leicht verformen lässt. Zudem ist Aluminium ein relativ leichtes, zähes Metall. Es ist dehnbar und kann durch Auswalzen auch zu einer dünnen Folie verarbeitet werden. Dadurch, dass die Umhüllung aus einem mehrschichtigen Material in Form einer Folie und das Strangpressprofil aus Aluminium ist, ist nicht nur ein PCM-Element mit einem hohen Wirkungsgrad, sondern auch ein leicht anpassbares und handhabbares PCM-Element gegeben, welches flexibel eingesetzt werden kann. Darüber hinaus kann das erfindungsgemäße PCT-Element auch noch innerhalb der Umhüllung ein Geflecht aus wärmeleitendem Material aufweisen, welches den Wirkungsgrad des Wärmeaustausches weiter erhöht.

Ein besonderer Vorteil des erfindungsgemäßen PCM-Elementes ist sein hoher Wirkungsgrad sowie seine einfache geometrische Grundform. Dadurch, dass Phasenwechselmaterial innerhalb einer, insbesondere zylinderförmigen, Umhüllung angeordnet ist, kann ein optimaler Wärmeübergang mit der Umgebung des PCM-Elementes bei einer sehr einfachen geometrischen Form realisiert werden. Hierbei wird eine leicht anpassbare Umhüllung in Form einer Folie gewählt werden. Die Einbringung von PCM in eine Folie und die anschließende Evakuierung führt zu einem sehr guten Wärmeübergang zwischen der Folie als Umhüllung und dem PCM und schafft andererseits ein optimal handhabbares PCM-Element. Dabei kann vorteilhafterweise vorgesehen werden, eine mehrschichtige Folie zu verwenden. Diese kann erfindungsgemäß eine hochelastische (Zwischen-)Schicht aufweisen, die ein Auslaufen oder Austreten des PCM bei Verformung und/oder Beschädigung sicher verhindert, während die ein- oder beidseitige Deckschicht aus einem flammfesten oder nicht-brennbaren Material besteht, um die Brandsicherheit zu erhöhen.

Zur Erhöhung des Wirkungsgrades des erfindungsgemäßen PCM-Elementes ist also innerhalb der Umfüllung ein Geflecht und/oder ein Profil aus wärmeleitendem Material angeordnet. Dabei ist das wärmeleitende Profil vorzugsweise ein Aluminium-Strangpressprofil und das wärmeleitende Geflecht vorzugsweise ein homogenes innerhalb der Umhüllung angeordnetes Metallgeflecht. Hierdurch wird dem Problem, dass beim Schmelzen des PCM (durch Wärmeaufnahme aus der Umgebung) die geschmolzene Phase einen schlechten Wärmeübergang hat, entgegengewirkt, da die Wärme innerhalb des PCM-Elementes in geeigneter, effizienter Weise durch das Metallgeflecht beziehungsweise das Aluminium-Strangpressprofil nach innen transportiert wird. Die Geometrie des Geflechts beziehungsweise des Profils ist derart ausgestaltet, dass der Wärmetransport von der Zylinderoberfläche zur Mitte optimiert ist.

Insbesondere zur Kühlung von geschlossenen Räumen kommen als Phasenwechselmaterialien Salze, Salzhydrate, Gemische aus Salzen und/oder Salzhydraten und/oder organische Materialien in Betracht. Das organische Material ist vorzugsweise Paraffin.

Eine weitere Möglichkeit zur Erhöhung des Wirkungsgrades eines erfindungsgemäßen PCM-Elementes besteht darin, dass innerhalb des PCM-Elementes erfindungsgemäß ein Rohr angeordnet ist. Vorzugsweise ist die Längsachse des PCM-Elementes mit der Längsachse des Rohres identisch. Dem Rohr können entsprechend der jeweiligen Anwendung unterschiedliche Funktionen zukommen.

Die Erfindung wird nachfolgend in Ausführungsbeispielen anhand der zugehörigen Zeichnungen näher erläutert. Es zeigen:
- Figur 1: eine teilweise geschnittene, perspektivische Darstellung eines erfindungsgemäßen PCM-Elementes mit einem Metallgeflecht,
- Figur 2: eine teilweise geschnittene, perspektivische Darstellung eines erfindungsgemäßen PCM-Elementes mit einem Aluminium-Strangpressprofil,
- Figur 3: eine schematische Darstellung eines Kühlgerätes bestehend aus mehreren parallel zueinander angeordneten erfindungsgemäßen PCM-Elementen.

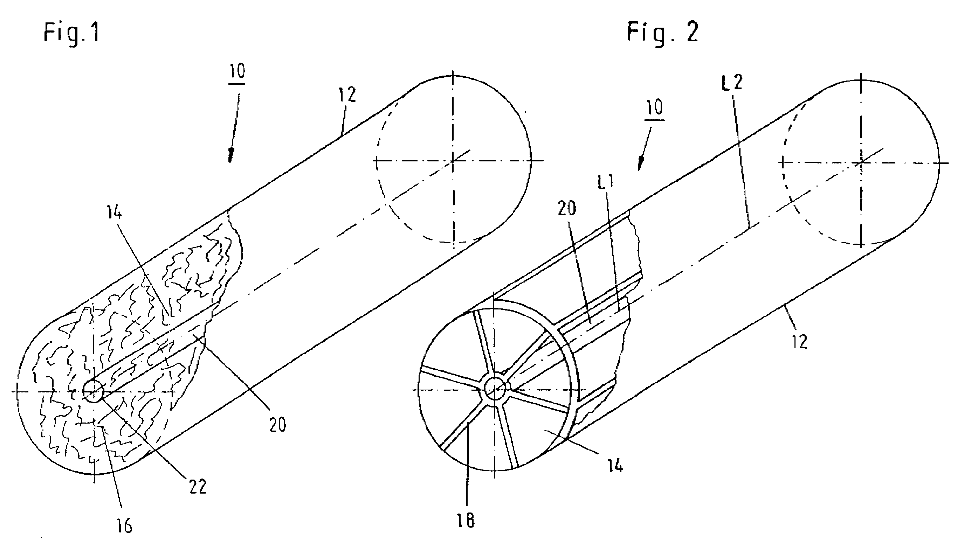

Figur 1 zeigt eine teilweise geschnittene, perspektivische Darstellung eines erfindungsgemäßen PCM-Elementes 10. Das PCM-Element 10 besteht aus einer Umhüllung 12, welche die äußere Form des PCM-Elementes 10 definiert. Es ist jedoch zur Anpassung an bauliche Gegebenheiten und/oder aus strömungstechnischen Gründen auch möglich, das PCM-Element mit einem ovalen oder polygonen Querschnitt zu gestalten. Erfindungsgemäß ist das PCM-Element 10 im Wesentlichen zylinderförmig ausgestaltet. Die zylindrische Oberfläche der Umhüllung 12 ermöglicht einen optimalen Wärmeübergang, wodurch das erfindungsgemäße PCM-Element 10 eine hohe Wärmemenge aufnehmen und speichern kann. Innerhalb der Umhüllung 12 ist das Phasenwechselmaterial 14 angeordnet. Die Umhüllung 12 bildet dabei auch die Versiegelung oder Verkapselung des PCM-Elementes 10 aus, um einen Flüssigkeitsaustritt, der zu Substanzverlust beziehungsweise Verunreinigung der Umgebung führen würde, zu verhindern. Darüber hinaus ist innerhalb der Umhüllung 12 ein Metallgeflecht 16 angeordnet, wobei das Metall eine besonders hohe Wärmeleitfähigkeit besitzt. Hierdurch wird erfindungsgemäß erreicht, dass die über die zylindrische Oberfläche aufgenommene Wärmemenge möglichst effizient ins Innere des PCM-Elementes 10 geleitet wird. Dadurch wird insbesondere ein gleichmäßiges Aufschmelzen des Phasenwechselmaterials 14 und eine damit einhergehende gleichmäßige Volumenänderung vermieden. Außerdem wird eine bessere Wärmeaufnahme/-abgabe durch das PCM-Element 10 erreicht. Weiterhin besitzt das erfindungsgemäße PCM-Element 10 ein im Inneren geführtes Rohr 20. Über die Rohranschlüsse 22 kann das PCM-Element 10 von innen über eine Flüssigkeit oder ein Gas gekühlt werden. Das Rohr 20 wird dabei konzentrisch im PCM-Element 10 angeordnet, so dass die Längsachse L1 des Rohres 20 mit der Längsachse L2 der Umhüllung 12 des PCM-Elements 10 zusammenfällt.

Eine alternative Ausgestaltung des PCM-Elementes 10 ist in Figur 2 perspektivisch dargestellt. Im Gegensatz zum Metallgeflecht 16 weist das erfindungsgemäße PCM-Element 10 ein Aluminium-Strangpressprofil 18 auf. Dieses Aluminium-Strangpressprofil 18 übernimmt hierbei die Aufgabe, die über die Umhüllung 12 aufgenommene Wärmemenge möglichst schnell in das Innere des PCM-Elementes 10 zu transportieren. Die ins Innere geleitete Wärmemenge kann nun über ein Kühlgas oder über eine Kühlflüssigkeit, welche durch das Rohr 20 fließt, abgeführt werden.

Das erfindungsgemäße PCM-Element 10 kann in Geräten unterschiedlichster Bauformen angewendet werden. Dabei ist es besonders vorteilhaft, dass aufgrund der einfachen geometrischen Ausgestaltung eines erfindungsgemäßen PCM-Elementes 10 entsprechend Figur 1 und 2 die Komposition mehrerer Elemente zu einer gewünschten Bauform besonders kostengünstig herstellbar ist.

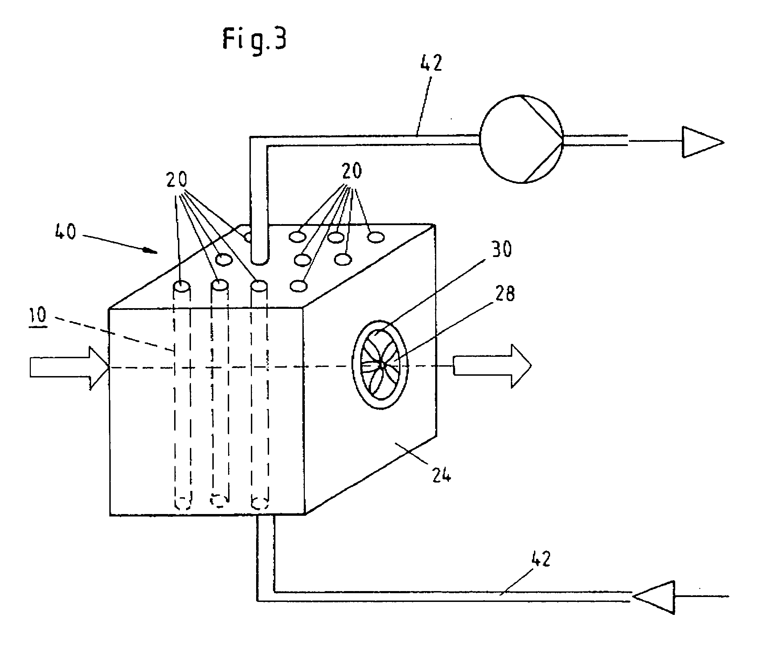

Figur 3 zeigt eine Vielzahl parallel zueinander angeordneter PCM-Elemente, welche das so genannte Rohrregister 40 ausbilden. Das Rohrregister 40 repräsentiert dabei die Gesamtheit der modulartig angeordneten Rohre 20. Weiterhin weist das Rohrregister 40 ein Gehäuse 24 auf, innerhalb dessen das Rohrregister 40 angeordnet ist. Dabei kann die Vielzahl der einzelnen, mit Phasenwechselmaterial versehenen PCM-Elemente 10 wie folgt genutzt werden: Über eine (hier nicht dargestellte) Lufteintrittsöffnung und die Luftaustrittsöffnung 28 sowie den Ventilator 30 kann die Raumluft gekühlt werden, indem diese an den einzelnen Umhüllungen vorbei streicht. Dabei nehmen die einzelnen mit Phasenwechselmaterial gefüllten PCM-Elemente 10 die Wärme der Raumluft auf und speichern diese. Zur externen Kühlung und damit zur Abführung der gespeicherten Wärmemenge kann das PCM-Element 10 beispielsweise von Außenluft, insbesondere Nachtluft, durchströmt werden. Es ist jedoch auch möglich, dass die einzelnen PCM-Elemente 10 mittels einer Kühlflüssigkeit oder eines Kühlgases, welche über die Anschlussleitung 42 zu- beziehungsweise abgeführt wird, gekühlt werden. Es ist aber auch möglich, über das Rohrregister 40 die zugeführte Kühlflüssigkeit oder das Kühlgas zu kühlen und über Nachtluft (siehe die durch Pfeile angedeutete Luftströmung) die PCM-Elemente 10 zu kühlen.

### BEZUGSZEICHENLISTE

- 10: PCM-Element
- 12: Umhüllung
- 14: Phasenwechselmaterial
- 16: Metallgeflecht
- 18: Aluminium-Strangpressprofil
- 20: Rohr
- 22: Rohranschluss
- 24: Gehäuse
- 28: Luftaustrittsöffnung
- 30: Ventilator
- 40: Rohrregister
- 42: Anschlussleitung
- L1, L2: Längsachse

## Patentansprüche

1. PCM (Phase Change Material)-Element (10) zur latenten Wärmespeicherung, bei dem Phasenwechelmaterial (14) (Phase Change Material) innerhalb einer Umhüllung (12) angeordnet ist, **dadurch gekennzeichnet, dass** innerhalb der Umhüllung (12) ein Geflecht und/oder ein Profil aus wärmeleitendem Material angeordnet ist, wobei das wärmeleitende Material ein Metall ist und das wärmeleitende Profil ein Aluminium-Strangpressprofil ist und die Umhüllung aus mindestens einem zwei- oder mehrschichtigen Material in Form einer Folie besteht, wobei eine Schicht aus einem hochelastischen Material und mindestens eine weitere Schicht aus einem flammfesten oder nicht-brennbaren Material besteht

2. PCM-Element nach Anspruch 1, **dadurch gekennzeichnet, dass** das wärmeleitende Geflecht homogen innerhalb der Umhüllung (12) angeordnet ist.

3. PCM-Element nach einem der Ansprüche 1 oder 2, **dadurch gekennzeichnet, dass** die Umhüllung (12) aus Material mit sehr hoher Wärmeleitung besteht.

4. PCM-Element nach Anspruch 1, **dadurch gekennzeichnet, dass** innerhalb des PCM-Elements (10) ein Rohr (20) angeordnet ist und dass bevorzugterweise die Längsachse (L2) des PCM-Elements (10) mit der Längsachse (L1) des Rohres (20) identisch ist.

5. PCM-Element nach einem der Ansprüche 1 bis 4, **dadurch gekennzeichnet, dass** das PCM-Element (10) eine lang gestreckte, zylindrische Form aufweist.

6. PCM-Element nach Anspruch 1 bis 4, **dadurch gekennzeichnet, dass** das PCM-Element (10) einen ovalen oder polygonalen Querschnitt aufweist.

7. PCM-Element nach einem der Ansprüche 1 bis 7, **dadurch gekennzeichnet, dass** das Phasenwechselmaterial (14) ein Salz, ein Salzhydrat, ein Gemisch von Salzen und/oder Salzhydraten und/oder ein organisches Material ist.

8. PCM-Element nach einem der Ansprüche 1 bis 8, **dadurch gekennzeichnet, dass** das organische Material Paraffin ist und das Gemisch Magnesium- und Lithiumnitrat aufweist.

## Claims

1. PCM (phase change material) element (10) for the latent heat accumulation for which phase change material (14) is placed inside a cover (12), **characterized in that** a braiding and/or a profile of heat conducting material is place inside the cover (12), whereby the heat conducting material is a metal and the heat conducting profile is an aluminium extruded section and the cover is made of at least one two-layer or multiple layer material in form of a foil, whereby a layer is made of a highly elastic material and at least one further layer of a flame resisting or a non combustible material.

2. PCM element according to claim 1, **characterized in that** the heat conducting material is placed homogeneously inside the cover (12).

3. PCM element according to any of the claims 1 or 2, **characterized in that** the cover (12) is made of a material with a very high thermal conduction.

4. PCM element according to claim 1, **characterized in that** a tube (20) is placed inside the PCM element (10) and that preferably the longitudinal axis (L2) of the PCM element (10) is identical with the longitudinal axis (L1) of the tube (20).

5. PCM element according to any of the claims 1 to 4, **characterized in that** the PCM element (10) has a long stretched cylindrical shape.

6. PCM element according to claim 1 to 4, **characterized in that** the PCM element (10) has an oval or polygonal section.

7. PCM element according to any of the claims 1 to 7, **characterized in that** the phase change material is a salt, a salt hydrate, a mixture of salts and/or salt hydrates and/or an organic material.

8. PCM element according to any of the claims 1 to 8, **characterized in that** the organic material is parrafin and the mixture magnesium and lithium nitrate.

## Revendications

1. Elément en matière de changement de phase (10) pour l'accumulation latente de chaleur pour lequel la matière de changement de phase est placée à l'intérieur d'une enveloppe (12), **caractérisé en ce qu'**un treillis et/ou un profilé en matière thermoconductrice est placé à l'intérieur de l'enveloppe (12),la matière thermoconductrice étant un métal et le profilé thermoconducteur étant un profilé filé d'aluminium et l'enveloppe étant constituée par au moins une matière en deux ou plusieurs couches en forme de feuille, une couche étant constituée par une matière extrêmement élastique et au moins une autre couche étant constituée par une matière résistante aux flammes ou non combustible.

2. Elément en matière de changement de phase selon la revendication 1, **caractérisé en ce que** le treillis thermoconducteur est placé homogène à l'intérieur de l'enveloppe (12).

3. Elément en matière de changement de phase selon l'une des revendications 1 ou 2, **caractérisé en ce que** l'enveloppe (12) est en une matière avec une conduction thermique très élevée.

4. Elément en matière de changement de phase selon la revendication 1, **caractérisé en ce qu'**un tube (20) est placé à l'intérieur de l'élément en matière de changement de phase (10) et que de préférence l'axe longitudinal (L2) de l'élément en matière de changement de phase (10) est identique à l'axe longitudinal (L1) du tube (20).

5. Elément en matière de changement de phase selon l'une des revendications 1 à 4, **caractérisé en ce que** l'élément en matière de changement de phase (10) présente une forme cylindrique étirée en longueur.

6. Elément en matière de changement de phase selon les revendications 1 à 4, **caractérisé en ce que** l'élément en matière de phase (10) présente une section ovale ou polygonale.

7. Elément en matière de changement de phase selon l'une des revendications 1 à 7, **caractérisé en ce que** la matière de changement de phase (14) est un sel, un hydrate de sel, un mélange de sels et/ou d'hydrates de sol et/ou une matière organique.

8. Elément en matière de changement de phase selon l'une des revendications 1 à 8, **caractérisé en ce que** la matière organique est la paraffine et le mélange un nitrate de magnésium et de lithium.
